# EUROPÄISCHE PATENTSCHRIFT

(11) **EP 1 541 607 B1**
(45) Veröffentlichungstag und Bekanntmachung des Hinweises auf die Patenterteilung: **10.02.2010**
(21) Anmeldenummer: 04028185.9
(22) Anmeldetag: 27.11.2004
(51) Int. Cl.: C08G 18/63, C08G 18/48

(54) **Polymerdispersionen in Polyesterpolyolen**
Polymer dispersions in polyester polyols
Dispersions de polymères dans des polyesterpolyols

(30) Priorität: 11.12.2003 DE 10357895
(43) Veröffentlichungstag der Anmeldung: 15.06.2005
(73) Patentinhaber: Bayer MaterialScience AG, 51368 Leverkusen (DE)
(72) Erfinder: Nefzger, Hartmut, Dr., 50259 Pulheim (DE); Bauer, Erika, 41363 Jüchen (DE); Michels, Erhard, Dr., 51061 Köln (DE)

(56) Entgegenhaltungen:
- EP-A- 0 250 351
- US-A- 4 883 832
- US-A- 5 830 944

## Beschreibung

Die vorliegende Erfindung betrifft Polymerdispersionen in Polyesterpolyolen, ein Verfahren zu ihrer Herstellung und deren Verwendung zur Herstellung von Polyurethanen, insbesondere mikrozellulären Polyurethanen.

Dispersionen fester, hochmolekularer Polymeren in Polyolen (Polymerpolyole) werden häufig zur Herstellung flexibler Polyurethan-Schaumstoffe eingesetzt. Vorteilhaft ist hierbei beispielsweise, dass die Offenzelligkeit dieser Schaumstoffe erhöht wird und die mechanischen Eigenschaften als Folge der erhöhten Härte verbessert werden. Zu nennen sind in diesem Zusammenhang Weiterreißfestigkeit, Zugspannung und Druckverformungsrest (Compression Set). Hierdurch wird die Einstellung einer verminderten Dichte unter Erhalt der sonst nur mit höherer Dichte erreichbaren Eigenschaften möglich. Dadurch lässt sich eine signifikante Materialeinsparung und somit Kostenreduktion realisieren.

Dispersionen von Polymeren in Polyolen sind literaturbekannt, wobei neben den durch Umsetzung von Olefmgruppen enthaltenden Monomeren in Polyolen erhältlichen Dispersionen auch andere Typen von Dispersionen beschrieben sind, z.B. solche, die aus Diaminen und Polyisocyanaten hergestellt werden. Ebenso wird deutlich, dass es sich bei den verwendeten Polyolen meistens um Polyether mit Molmassen von 1000 bis 10000 g/mol handelt, dagegen seltener um Polyesterpolyole. Ein Grund hierfür mag in der vergleichsweise hohen Viskosität liegen, die die Polyesterpolyole selbst und insbesondere auf Polyesterpolyolen basierende Dispersionen im Vergleich zu entsprechenden auf Polyetherpolyolen basierenden Systemen aufweisen. Dennoch besteht ein technisches Interesse an den auf Polyesterpolyolen basierten Dispersionen, insbesondere deswegen, weil daraus hergestellte Polyurethansysteme in vielerlei Hinsicht bessere mechanische Eigenschaften aufwiesen als die entsprechenden Polyurethane auf Polyetherbasis.

Für wässrige Systeme zur Herstellung hitzehärtbarer Einbrennlacke beschreibt DE-OS 44 27 227 die Verwendung von in Wasser dispergierten, mit Polymerisaten aus olefinischen Monomeren gefüllten Polyesterpolyolen als eine der Systemkomponenten.

Wird als vinylisches Monomer Styrol in derartigen Systemen eingesetzt, so sind auf Grund von dessen im Vergleich zu Acrylnitril niedriger Reaktivität und der auf viele Molekülspezies geringeren Kettenübertragungsgeschwindigkeit ansonsten analoge Dispersionen weniger stabil. Demzufolge erfordert der Einsatz von Styrol als radikalisch polymerisierbares vinylisches Monomer zur Herstellung von Dispersionen auf Polyesterpolyolbasis den Einbau von Pfropfstellen in die bzw. am Ende der Polyestermoleküle. Dies gilt insbesondere, wenn ausschließlich Styrol als vinylisches Monomer eingesetzt wird. Solche Pfropfstellen müssen die Kettenübertragung der radikalisch wachsenden Polymermoleküle unter Bildung kovalenter Bindungen und wenn möglich unter Erhalt der wachsenden Radikalkette gewährleisten.

Einige Beispiele für derartige Modifizierungen sind in EP-A 250 351 aufgeführt. So kann z.B. der Einbau von Maleinsäureanhydrid in die Polyesterpolyolkette diese Funktion ausfüllen. EP-A 0 250 351 offenbart ein Verfahren, bei dem in einem Polyesterpolyol der Molmasse 1000 bis 5000 g/mol mindestens ein ethylenisch ungesättigtes Monomer polymerisiert wird. Das Polyesterpolyol enthält hierbei neben den üblichen Bausteinen Polycarbonsäure und Polyalkohol auch olefinische Bestandteile, insbesondere den Baustein Maleinsäureanhydrid.

Nachteilig am Einbau derartiger, die freie Beweglichkeit der Segmente der Polyesterkette verringernder, ungesättigter Polycarbonsäuren, bzw. Anhydride ist jedoch die damit verbundene Viskositätserhöhung der eingesetzten Polyesterpolyole bzw. Polyesterpolyolgemische. In gleicher Weise wirkt auch die durch Einbau von Maleinsäure in die Polyesterkette erhöhte Konzentration an polaren Estercarbonylfunktionen viskositätserhöhend. Die erhöhte Viskosität schränkt die Verwendbarkeit der schon per se höherviskosen Polyesterpolyole weiter ein.

US5830944 offenbart eine Polymerdispersion (siehe Beispiel 1), die aus den folgenden Komponenten besteht:
- Styrol-Monomere,
- ein Polyesterpolyol auf Basis von Adipinsäure und 1,4-Butandiol,
- ein OH-Prepolymer, das durch Umsetzung von einem Polyesterpolyol (1,1 mol) auf Basis von Adipinsäure und 1,4-Butandiol mit molar unterschüssigem 4,4'-Diphenylmethandiisocyanat (1,0 mol) hergestellt wurde.

Neben diesen Nachteilen zeigt sich in der industriellen Praxis, dass die mit ungesättigten Bausteinen modifizierten Polyesterpolyole in sehr vielen Fällen grobteilige Dispersionen ergeben, die meist mit dem bloßen Auge sichtbare Partikel enthalten und oft schwer filtrierbar sind.

Aufgabe der vorliegenden Erfmdung ist es daher, ein verbessertes Verfahren zur Herstellung von Polymerpolyolen auf Polyesterbasis zur Verfügung zu stellen.

Es wurde nun gefunden, dass die Mitverwendung geringer Mengen von OH-Prepolymeren, die durch Umsetzung von Tetrahydrofuran-Oligomeren mit molar unterschüssigem Polyisocyanat erhältlich sind, als Bestandteil des Polyesterpolyols zu verbesserten Polyesterpolyoldispersionen führt.

Gegenstand der Erfindung sind daher Polymerdispersionen, die mindestens ein durch Umsetzung von Tetrahydrofuran-Oligomeren mit molar unterschüssigem Polyisocyanat erhältliches OH-Prepolymer enthalten.

Gegenstand der Erfindung ist auch ein Verfahren zur Herstellung der erfindungsgemäßen Polymerdispersionen durch radikalische Polymerisation olefmisch ungesättigter Monomere in Gegenwart eines durch Umsetzung von Tetrahydrofuran-Oligomeren mit molar unterschüssigem Polyisocyanat erhältlichen OH-Prepolymers und Polyesterpolyolen ohne olefinisch ungesättigte Gruppen.

Das Basis-Polyesterpolyol wird aus Komponenten hergestellt, die keine olefinischen Bestandteile aufweisen. Basis-Polyesterpolyole sind Hydroxylendgruppen aufweisende Polykondensationsprodukte aus Diolen und Dicarbonsäuren bzw. deren Anhydriden oder niedermolekularen Estern oder Halbestern, bevorzugt solchen mit monofunktionellen Alkoholen wie Methanol, Ethanol, 1-Propanol, 2-Propanol, 1-Butanol und 2-Butanol.

Beispiele für geeignete Diole sind Ethylenglykol, 1,2-Propandiol, 1,3-Propandiol, 2-Methyl-1,3-propandiol, 1,4-Butandiol, 1,5-Pentandiol, 3-Methyl-1,5-pentandiol, 1,6-Hexandiol, 1,8-Octandiol, 1,10-Decandiol, Neopentylglykol, Diethylenglykol, Triethylenglykol, Tetraethylenglykol usw. Geeignet sind auch Polyetherpolyole mit zahlenmittleren Molmassen von 250 bis 4500 g/mol, insbesondere solche, die überwiegend von 1,2-Propylenoxid abgeleitete Einheiten enthalten. Entsprechend sind auch Etheroligomere des Butandiols wie Dibutylenglykol, Tributylenglykol, bzw. entsprechende, durch ringöffnende Polymerisation des Tetrahydrofurans erhältliche Diole mit zahlenmittleren Molmassen von 240 bis 3000 g/mol als Diole einsetzbar. Entsprechende Verbindungen des 1,6-Hexandiols, Di- und Trihexylenglykol, bzw. Oligomerengemische, die durch azeotrope Verätherung des 1,6-Hexandiols erhalten werden können, sind ebenfalls geeignet.

Daneben können auch bis zu 5 Gew.-% höherfunktionelle Polyole mitverwendet werden, beispielsweise 1,1,1-Trimethylolpropan, Glycerin oder Pentaerythrit, sowie auf diesen gestartete Polypropylenoxid- und Polyethylenoxidpolyole mit zahlenmittleren Molmassen von 250 bis 4500 g/mol.

Als Dicarbonsäuren ohne Olefmgruppierung können aliphatische und aromatische Verbindungen einzeln oder im Gemisch verwendet werden. Beispielhaft seien genannt: Bernsteinsäure, Glutarsäure, Adipinsäure, Pimelinsäure, Suberinsäure, Sebacinsäure, Phthalsäure, Isophthalsäure, Terephthalsäure. Daneben können auch deren Anhydride sowie deren Ester oder Halbester mit niedermolekularen, insbesondere monofunktionellen Alkoholen eingesetzt werden.

Analog können auch Ester von cyclischen Hydroxylcarbonsäuren, bevorzugt solche, die aus ε-Caprolacton hergestellt werden können, eingesetzt werden.

Entsprechend können auch Polyester der Kohlensäure, also Polycarbonatpolyole verwendet oder mitverwendet werden. Diese können hergestellt werden durch Umesterung von Dimethylcarbonat oder Diphenylcarbonat mit Diolen und Triolen, sowie durch Umesterung mit hydroxylendständigen Oligoester- und Oligoetherdiolen mit zahlenmittleren Molmassen von 200 bis 1000 g/mol.

Die erfindungsgemäß zu verwendenden Polyesterpolyole weisen eine mittlere Hydroxylfunktionalität von 1,8 bis 3, bevorzugt 1,85 bis 2,7, besonders bevorzugt 1,9 bis 2,5 auf, sowie eine zahlenmittlere Molmasse von 1000 bis 5000, bevorzugt 1300 bis 4800, besonders bevorzugt 1600 bis 4500 g/mol auf.

Werden mehrere Polyesterpolyole verwendet, so beziehen sich die im obigen Absatz genannten Grenzen der Molmasse auf das Polyesterpolyolgemisch. In diesem Fall kann selbstverständlich das zahlenmittlere Molekulargewicht wenigstens einer der Einzelkomponenten auch außerhalb der angegebenen Grenzen, z.B. im Bereich von 450 bis 1600 g/mol liegen.

Die eingesetzten OH-Prepolymere sind erhältlich durch Umsetzung von Oligomeren des Tetrahydrofurans (,THF-Oligomere') mit molar unterschüssigem Polyisocyanat. Die an sich bekannten THF-Oligomere werden üblicherweise säurekatalysiert in ringöffnender Polymerisation von Tetrahydrohydrofuran hergestellt, weisen normalerweise zwei Hydroxylendgruppen pro Molekül und zahlenmittlere Molmassen von 200 bis 3000, bevorzugt 240 bis 2000, besonders bevorzugt 250 bis 1000 g/mol auf. Die molaren Einsatzverhältnisse von Isocyanatgruppen zu Hydroxylgruppen (Kennzahl) betragen hierbei 0 bis 0,9, bevorzugt 0 bis 0,7, besonders bevorzugt 0,3 bis 0,6.

Als Polyisocyanate können aliphatische und aromatische Polyisocyanate eingesetzt werden, z.B. Hexamethylendiisocyanat, Isophorondiisocyanat, 2,4- und 2,6-Toluylendiisocyanat oder deren Gemische, sowie Polyisocyanate aus der Diphenylmethandiisocyanat-Reihe, einschließlich deren höherkernige Vertreter, Gemische derselben, sowie Naphthalin-1,5-diisocyanat.

Besonders bevorzugt sind Polyisocyanate aus der Diphenylmethan-Reihe mit Anteilen an sog. 2-Kem-Spezies (2,2'-, 2,4'- und 4,4'-Isomeren) von weniger als 50 Gew.-%, bzw. einer mittleren Funktionalität von mindestens 2,2.

Die OH-Prepolymere werden in solchen Mengen eingesetzt, dass ihr Anteil, bezogen auf den gesamten Reaktionsansatz, inclusive der radikalisch polymerisierbaren Vinyl-Monomere sowie etwaiger Lösemittel, 0,05 bis 15 Gew.-% beträgt.

Beispiele geeigneter radikalisch polymerisierbarer Vinyl-Monomere sind Styrol, alpha-Methylstyrol, Ethylstyrol, Vinyltoluol, Divinylbenzol, Isopropylstrol, Chlorostyrol, Butadien, Isopren, Pentadien, Acrylsäure, Methacrylsäure, Methacrylsäuremethylester, Vinylacetat, Acrylnitril, Methylvinylketon oder Kombinationen dieser Verbindungen. Bevorzugt eingesetzt werden Styrol, alpha-Methylstyrol, Acrylnitril, Methacrylnitril, Methacrylsäurealkylester mit C₁-C₃₀-Alkylresten (z.B. Methyl-, Ethyl-, Butyl-, Hexyl-, Dodecyl- usw). Besonders bevorzugt sind Styrol und Acrylnitril, wobei das Styrol bevorzugt in einem Anteil von mehr als 75 Gew.-% verwendet wird, besonders bevorzugt von mehr als 90 Gew.-%.

Der Anteil dieser erfindungsgemäß zu verwendenden radikalisch polymeriserbaren Vinyl-Monomeren am Gesamtansatz, d.h. der Füllgrad der fertigen Dispersion, beträgt erfindungsgemäß 2 bis 55 Gew.-%, bevorzugt 4 bis 40 Gew.-%, besonders bevorzugt 5 bis 33 Gew.-%. Der Füllgrad ist durch Nachverdünnung mit einem zweiten Basis-Polyesterpolyol einstellbar.

In einer bevorzugten Ausführungsform werden als Basis-Polyesterpolyol zwei unterschiedliche Polyesterpolyole eingesetzt, die sich mindestens bezüglich ihres zahlenmittleren Molekulargewichtes unterschieden, wobei das Polyesterpolyol mit dem kleineren Molekulargewicht erst dann zugemischt wird, wenn die radikalische Polymerisation des vinylischen Monomeren im Gemisch von Polyesterpolyol mit höherem Molekulargewicht und OH-Prepolymer beendet ist.

Für die Initiierung der radikalischen Polymerisation werden an sich bekannte Radikalstarter verwendet. Beispiele aus der Gruppe der Azo-Initiatoren sind alpha, alpha'-azo-2-Methylbutyronitril, alpha,alpha'-azo-2-Heptonitril, 1,1'-azo-1-Cyclohexancarbonitril, Dimethyl-alpha,alpha'azo-isobutyrat, 4,4'-azo-4-cyanopentansäure, Azo-bis(2-methylbutyronitril), Azo-bis-isobutyronitril. Aus der Gruppe der Peroxide, Persulfate, Perborate, Percarbonate seien beispielhaft genannt: Dibenzoylperoxid, Acetylperoxid, Benzyolhydroperoxid, t-Butylhydroperoxid, Di-t-Butylperoxid, 2-Ethylhexansäure-tert.-butylperester, Diisopropylperoxydicarbonat, usw.

Die Polymerisation wird typischerweise in Anwesenheit eines Lösungsmittels ausgeführt, kann aber auch ohne Lösungsmittel bewerkstelligt werden. Als Lösungsmittel können beispielsweise eingesetzt werden: Benzol, Toluol, Xylol, Acetonitril, Hexan, Heptan, Dioxan, Ethylacetat, N,N-Dimethylformamid, N,N-Dimethylacetamid, etc. Bevorzugt sind Benzol, Xylol und Toluol.

Gegenstand der Erfindung sind auch die nach den erfindungsgemäßen Verfahren erhaltenen Polymerdispersionen. Die erhaltenen Produkte sind weiße Dispersionen, die ein hochmolekulares Polymer oder Copolymer, ein konventionelles, bei Raumtemperatur festes oder bevorzugt flüssiges Polyesterpolyol und ein zur Phasenstabilisierung notwendiges OH-Prepolymer enthalten. Sie können beispielsweise bei einem Füllgrad von 25 Gew.-% Polystyrol und einer OH-Zahl von 50 bis 60 Viskositäten von 15 000 bis 35 00 mPas bei 25°C und 3000 bis 8000 mPas bei 50°C aufweisen. Die Viskosität ist proportional zur Viskosität des verwendeten Basis-Polyesterpolyols und umgekehrt proportional zur OH-Zahl.

Die erfindungsgemäß hergestellten Polymerpolyole eignen sich zur Herstellung von Polyurethanen, bzw. Polyurethan-Werkstoffen, insbesondere zur Herstellung mikrozellularer Polyurethan-Elastomere, wie sie für die Herstellung von Schuhsohlen Verwendung finden. Gegenstand der Erfindung sind auch Schuhsohlen enthaltend das Umsetzungsprodukt der erfindungsgemäßen Polymerdispersionen mit Polyisocyanaten oder Polyisocyanat-Prepolymeren.

Mit den erfindungsgemäßen Polymerdispersionen lassen sich Polyurethane erhalten, die gegenüber Polyurethanen, die ohne Polymerdispersion hergestellt werden, bei gleicher Dichte eine größere Härte aufweisen. Wenn neben der Dichte auch die Härte konstant gehalten werden soll, kann bei Einsatz der erfindungsgemäßen Polymerdispersionen mit einer deutlich verringerten Menge an Polyisocyanat gearbeitet werden.

### Beispiele

A.) Basis-Polyesterpolyole
B.) OH-Prepolymere und modifizierte Polyesterpolyole
C.) Polymerdispersionen

### A.) Basis-Polyesterpolyole

### A. 1. Polyetheresterpolyol

Adipinsäure, Ethylenglykol, Butandiol, Diethylenglykol und ein bifunktionelles Polyetherpolyol mit einem Propylenoxidgehalt von ca. 70% und einem Ethylenoxidgehalt von ca. 30% sowie einer OH-Zahl von 28 mg KOH/g (Desmophen® L 2830, Bayer AG) im Gew.-Verhältnis 36,53 : 5,19 : 9,53 : 8,67 : 28,97 wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 39,1 mg KOH/g und die Viskosität zu 1070 mPas (75°C).

### A.2. Basis-Polyesterpolyol mit hohem Molekulargewicht

2779 g (26,22 Mol) Diethylenglykol, 813 g (13,12 Mol) Ethylenglykol und 5452 g (37,12 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 27,8 mg KOH/g und die Säurezahl zu 0,8 mg KOH/g..

### A.3.) Basis-Polyesterpolyol mit niedrigern Molekulargewicht

2628 g (24,79 Mol) Diethylenglykol, 1538 g (24,79 Mol) Ethylenglykol und 5970 g (40,89 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 98,1 mg KOH/g und die Säurezahl zu 0,3 mg KOH/g. Viskosität: 210 mPas (75°C).

### A.4. Desmophen® 2002H (Bayer AG)

Handelsübliches Polyadipat, hergestellt aus Adipinsäure und einem Gemisch aus Ethylen- und Butylenglykol mit einer OH-Zahl von ca. 56 mg KOH/g sowie einer Viskosität von ca. 620 mPas (75°C).

### A.5. Basis-Polyesterpolyol mit niedrigem Molekulargewicht

1208 g (11,4 Mol) Diethylenglykol, 1208 g (19,48 Mol) Ethylenglykol, 1208 g (13,42 Mol) Butandiol und 5840 g (40 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 60,1 mg KOH/g und die Säurezahl zu 0,7 mg KOH/g. Viskosität: 8930 mPas (25°C).

### B.) OH-Prepolymere und modifizierte Polyesterpolyole

### B.1. OH-Prepolymer (erfindungsgemäß)

1260 g Polytetrahydrofuran mit einer zahlenmittleren Molmasse von 650 g (Poly-THF 650, BASF AG) wurden bei 100°C für 3 Std. mit 244 g eines Polyisocyanats der Diphenylmethanreihe (Desmodur® 44V20, Bayer AG) bis zum Erreichen eines NCO-Gehaltes von 0% NCO umgesetzt. Die OHZ betrug 91,1 mg KOH/g; die Viskosität wurde 73900 mPas bei 25°C, bzw. 15100 mPas bei 50°C bestimmt.

### B.2. OH-Prepolymer (Vergleich)

463 g des Polyadipatpolyols A.3. wurden für jeweils eine Stunde bei 80°C,dann bei 100°C, sowie anschließend für weitere zwei Stunden bei 110°C mit 62,5 g eines Polyisocyanats der Diphenylmethanreihe (Desmodur® 44V20, Bayer AG) bis zum Erreichen eines NCO-Gehaltes von 0% NCO umgesetzt. Die Viskosität wurde zu 2950 mPas (75°C) bestimmt.

### B.3. Acrylat-Endgruppen enthaltendes Polyetherpolyol (Vergleich)

4000 g Polypropylenoxid mit einer OH-Zahl von 28 mg KOH/g, gestartet auf TMP und 1 g Titantetraisobutylat wurden bei 50°C langsam mit 144 g Acrylsäuremethylester versetzt, wobei Methanol bei erhöhter Temperatur aus dem Reaktionsgemisch entfernt wurde. Die OH-Zahl des Acrylat-Endgruppen enthaltenden Polyetherpolyols betrug 21 mg KOH/g; die Viskosität 1700 mPas bei 25°C.

### B.4. Maleinsäure enthaltendes Polyesterpolyol (Vergleich)

1148 g (7,65 Mol) Triethylenglykol und 583 g (5,95 Mol) Maleinsäureanhydrid, sowie 0,5 g Hydrochinon wurden unter Zinndichlorid-Katalyse (40 mg) in einer Schmelzpolykondensation bei 200°C unter Wasserabspaltung, zuletzt im Vakuum, umgesetzt. Die OHZ betrug 112 mgKOH/g; die Säurezahl wurde zu 0,9 mgKOH/g bestimmt.

### B.5. Maleinsäure enthaltendes Polyesterpolyol (Vergleich)

5548 g (38 Mol) Adipinsäure, 196 g (2 Mol) Maleinsäureanhydrid, 1728 g (27,87 Mol) Ethylenglykol und 1728 g (16,3 Mol) Diethylenglykol (16,3 Mol) wurden unter Zinndichlorid-Katalyse (200 mg) in einer Schmelzpolykondensation bei 200°C unter Wasserabspaltung, zuletzt im Vakuum, umgesetzt. Die OHZ betrug 55 mg KOH/g; die Säurezahl wurde zu 0,2 mg KOH/g bestimmt. Viskosität bei 25°C: 2550 mPas.

### C.) Polymerdispersionen

### C.1. Herstellung einer Polymerdispersion (erfindungsgemäß)

476 g Polyetheresterpolyol A. 1. wurden mit 3 g des OH-Prepolymeren B. 1., 100 g Toluol und 1 g Azo-bis(2-methylbutyronitril) verrührt. Man leitete für 20 min. einen schwachen Stickstoffstrom durch die Lösung, gab 80 g Styrol zu und erwärmte unter Rühren im Verlauf von 30 min. auf 80°C. Nach 20 min. bei 80°C wurde die Temperatur in weiteren 30 min. auf 115°C erhöht.

Eine zuvor bereite Lösung aus 600 g Polyetheresterpolyol A.1., 21 g des OH-Prepolymeren B.1., 200 g Toluol, 5,4 g Azo-bis(2-methylbutyronitril) und 430 g Styrol wurde im Verlauf von 2 Std. bei einer Drehzahl von zunächst 300 U/min. zudosiert, wobei die Drehzahl nach 20 min. auf 350 U/min. und nach weiteren 40 min. auf 400 U/min. erhöht wurde. Nach Ende dieser Zudosierung ließ man 5 min. nachreagieren.

Eine weitere zuvor bereitete Lösung aus 38 g Polyetheresterpolyol A. 1., 2 g des OH-Prepolymeren B. 1., 50 g Toluol und 0,6 g Azo-bis(2-methylbutyronitril) wurde danach innerhalb von 30 min. zudosiert. Man ließ nach beendeter Zugabe für 2 Std. bei 120°C nachreagieren.

Zur Aufarbeitung wurde an das Reaktionsgemisch zunächst Wasserstrahlvakuum angelegt, um das Lösungsmittel und eventuell nicht umgesetztes Styrol weitgehend zu entfernen. Zur Vervollständigung legte man Ölpumpenvakuum an, wobei nach 2 Stunden bei 0,5 mbar sowohl Styrol als auch Toulol weitestgehend entfernt waren.

Die erhaltene Dispersion war über ein 100µm Sieb filtrierbar, phasenstabil und wies bei 25°C eine Viskosität von 18500 mPas, bzw. bei 50°C von 4350 mPas auf. Der Füllgrad betrug ca. 25,5 Gew.-%, die OH-Zahl 61,4 mg KOH/g.

### C.2. Herstellung einer Polymerdispersion unter Verwendung eines OH-Prepolymeren auf Polyadipatbasis (Vergleich)

- Vorlage:: 476 g Polyesterpolyol A.2.
3,0 g OH-Prepolymer B.2.
100 g Toluol
80 g Styrol
1 g Azo-bis(2-methylbutyronitril)
wurden bei 115°C vorgelegt. Analog Beispiel. C.1. wurden folgende Gemische zudosiert:
- Dosierung 1:: 600 g Polyesterpolyol A.2.
21 g OH-Prepolymer B.2.
200 g Toluol
800 g Styrol
6,4 g Azo-bis(2-methylbutyronitril)
- Dosierung 2:: 38 g Polyesterpolyol A.2.
4 g OH-Prepolymer B.2.
100 g Toluol
0,6 g Azo-bis(2-methylbutyronitril)

Vor der Filtration wurde die OH-Zahl zu 18 mg KOH/g bestimmt. Es wurde mit 1123 g des Polyesterpolyols A.3. abgemischt.

Die erhaltene Dispersion war über ein 200µm Sieb schwer filtrierbar. Es verblieb ein erheblicher Filtrationsrückstand, so dass das Filtrationsverhalten mit mangelhaft einzustufen war. Die Dispersion war jedoch phasenstabil und wies bei 25°C eine Viskosität von 26800 mPas, bzw. bei 50°C von 5340 mPas auf; Füllgrad ca. 23,9 Gew.-%, OH-Zahl 57,7 mg KOH/g.

### C.3. Herstellung einer Polymerdispersion unter Verwendung eines Acrylatgruppen enthaltenden Polyetherpolyols (Vergleich)

- Vorlage:: 476 g Polyesterpolyol A.4.
8,7 g modifiziertes Polyol B.3.
200 g Toluol
80 g Styrol
0,6 g Azo-bis(2-methylbutyronitril)
wurden bei 115°C vorgelegt. Analog Beispiel. C.1. wurden folgende Gemische zudosiert:
- Dosierung 1:: 538 g Polyesterpolyol A.4.
43 g modifiziertes Polyol B.3.
200 g Toluol
738 g Styrol
5,4 g Azo-bis(2-methylbutyronitril)
- Dosierung 2:: 100 g Polyesterpolyol A.4.
10,4 g modifiziertes Polyol B.3.
50 g Toluol

Die erhaltene Dispersion war instabil; es bildeten sich zwei Phasen; Füllgrad ca. 40 Gew.-%.

### C.4. Herstellung einer Polymerdispersion unter Verwendung eines Maleinsäureeinheiten enthaltenden Polyesterpolyols (Vergleich)

- Vorlage:: 476 g Polyesterpolyol A.3.
8,7 g modifiziertes Polyol B.4.
200 g Toluol
80 g Styrol
0,6 g Azo-bis(2-methylbutyronitril)
33 g Isopropanol
wurden bei 115°C vorgelegt. Analog Beispiel. C.1. wurden folgende Gemische zudosiert:
- Dosierung 1:: 600 g Polyesterpolyol A.3.
43 g modifiziertes Polyol B.4.
200 g Toluol
533 g Styrol
5,4 g Azo-bis(2-methylbutyronitril)
- Dosierung 2:: 38 g Polyesterpolyol A.3.
10,4 g modifiziertes Polyol B.4.
50 g Toluol
0,6 g Azo-bis(2-methylbutyronitril)

Die erhaltene Dispersion war nicht filtrierbar.

### C.5. Herstellung einer Polymerdispersion unter Verwendung eines Maleinsäureeinheiten enthaltenden Polyadipats (Vergleich)

- Vorlage:: 830 g Polyesterpolyol A.5.
50 g Toluol
wurden bei 120°C vorgelegt. Analog Beispiel. C.1. wurde folgendes Gemisch zudosiert:
- Zudosierung:: 353 g Polyesterpolyol A.5.
62 g modifiziertes Polyol B.5.
200 g Toluol
523 g Styrol
13 g Azo-bis(2-methylbutyronitril)

Das Reaktionsprodukt war nicht filtrierbar.

## Patentansprüche

1. Polymerdispersion, enthaltend mindestens ein durch Umsetzung von Tetrahydrofuran-Oligomeren mit molar unterschüssigem Polyisocyanat erhältliches OH-Prepolymer.

2. Verfahren zur Herstellung von Polymerdispersionen durch radikalische Polymerisation olefinisch ungesättigter Monomere in Gegenwart eines durch Umsetzung von Tetrahydrofuran-Oligomeren mit molar unterschüssigem Polyisocyanat erhältlichen OH-Prepolymeren und Polyesterpolyolen ohne olefinisch ungesättigte Gruppen.

3. Verfahren gemäß Anspruch 2, **dadurch gekennzeichnet, dass** zur Herstellung der OH-Prepolymeren aromatische Polyisocyanate verwendet werden.

4. Verfahren gemäß Anspruch 3, bei dem als aromatische Polyisocyanate solche der Diphenylmethanreihe mit weniger als 50 Gew.-% an Zweikernisomeren verwendet werden.

5. Verfahren gemäß einem der Ansprüche 2 bis 4, bei dem als olefinisch ungesättigte Monomere Styrol, alpha-Methylstyrol, Ethylstyrol, Vinyltoluol, Divinylbenzol, Isopropylstyrol, Chlorstyrol, Butadien, Isopren, Pentadien, Acrylsäure, Methacrylsäure, Methacrylsäureethylester, Vinylacetat, Acrylnitril, Methylvinylketon oder Kombinationen daraus eingesetzt weiden.

6. Verfahren nach einem der Ansprüche 2 bis 5, bei dem Polycarbonatpolyole eingesetzt werden.

7. Verwendung von Polymerdispersionen gemäß Anspruch 1 zur Herstellung von Polyurethanen

8. Schuhsohle enthaltend das Umsetzungsprodukt von Polymerdispersionen gemäß Anspruch 1 mit Polyisocyanaten.

## Claims

1. A polymer dispersion containing at least one OH prepolymer obtainable by reacting tetrahydrofuran oligomers with polyisocyanate in a molar substoichiometric amount.

2. A method for producing polymer dispersions by free-radical polymerisation of olefinically unsaturated monomers in the presence of an OH prepolymer obtainable by reacting tetrahydrofuran oligomers with polyisocyanate in a molar substoichiometric amount and polyester polyols without olefinically unsaturated groups.

3. A method according to claim 2, **characterised in that** aromatic polyisocyanates are used for producing the OH prepolymers.

4. A method according to claim 3, in which the aromatic polyisocyanates used are those from the diphenylmethane series comprising less than 50 wt.% of binuclear isomers.

5. A method according to any one of claims 2 to 4, in which the olefinically unsaturated monomers used are styrene, alpha-methylstyrene, ethylstyrene, vinyltoluene, divinylbenzene, isopropylstyrene, chlorostyrene, butadiene, isoprene, pentadiene, acrylic acid, methacrylic acid, methyl methacrylate, vinyl acetate, acrylonitrile, methyl vinyl ketone or combinations thereof.

6. A method according to any one of claims 2 to 5 in which polycarbonate polyols are used.

7. Use of polymer dispersions according to claim 1 for producing polyurethanes.

8. A shoe sole containing the reaction product of polymer dispersions according to claim 1 with polyisocyanates.

## Revendications

1. Dispersion polymère contenant au moins un prépolymère OH obtenu par réaction d'oligomères de tétrahydrofurane avec un polyisocyanate en quantité molaire en défaut.

2. Procédé pour la préparation de dispersions polymères par polymérisation radicalaire de monomères à insaturation oléfinique en présence d'un prépolymère OH obtenu par réaction d'oligomères de tétrahydrofurane avec un polyisocyanate en quantité molaire en défaut et de polyesterpolyols sans groupe à insaturation oléfinique.

3. Procédé selon la revendication 2, **caractérisé en ce que** l'on utilise pour la préparation du prépolymère OH des polyisocyanates aromatiques.

4. Procédé selon la revendication 3, dans lequel on utilise comme polyisocyanates aromatiques ceux de la série du diphénylméthane avec moins de 50 % en poids d'isomères à deux noyaux.

5. Procédé selon l'une quelconque des revendications 2 à 4, dans lequel on utilise comme monomères à insaturation oléfinique du styrène, de l'alpha-méthylstyrène, de l'éthylstyrène, du vinyltoluène, du divinylbenzène, de l'isopropylstyrène, du chlorostyrène, du butadiène, de l'isoprène, du pentadiène, de l'acide acrylique, de l'acide méthacrylique, du méthacrylate de méthyle, de l'acétate de vinyle, de l'acrylonitrile, de la méthylvinylcétone ou des combinaisons de ceux-ci.

6. Procédé selon l'une quelconque des revendications 2 à 5, dans lequel on utilise des polycarbonatepolyols.

7. Utilisation de dispersions polymères selon la revendication 1 pour la préparation de polyuréthanes.

8. Semelles de chaussures contenant le produit de réaction de dispersions polymères selon la revendication 1 avec des polyisocyanates.
